# EUROPÄISCHE PATENTSCHRIFT

(11) **EP 2 706 349 B1**
(45) Veröffentlichungstag und Bekanntmachung des Hinweises auf die Patenterteilung: **16.08.2017**
(21) Anmeldenummer: 13183594.4
(22) Anmeldetag: 09.09.2013
(51) Int. Cl.: G01N 21/85, G01N 21/03, G01N 21/27, G01N 21/59

(54) **Messzelle sowie Opazimeter mit Messzelle**
Measurement cell and opacimeter with measuring cell
Cellule de mesure et opacimètre doté d'une telle cellule de mesure

(30) Priorität: 10.09.2012 DE 102012216018
(43) Veröffentlichungstag der Anmeldung: 12.03.2014
(73) Patentinhaber: MAHA Maschinenbau Haldenwang GmbH & Co. KG, 87490 Haldenwang (DE)
(72) Erfinder: Knox, Gunther, 87781 Ungerhausen (DE)
(74) Vertreter: MERH-IP Matias Erny Reichl Hoffmann Patentanwälte PartG mbB

(56) Entgegenhaltungen:
- EP-A1- 0 026 093
- EP-A2- 1 640 707
- DE-A1- 4 315 152
- DE-U1- 20 022 379
- US-A- 4 404 841
- US-A- 4 872 753

## Beschreibung

Die Erfindung betrifft eine Messzelle sowie ein Opazimeter, das eine derartige Messezelle aufweist.

Opazimeter sind Messgeräte, die die Trübung ("Opazität") von Fluiden, d. h. Gasen und Flüssigkeiten, messen. Hierzu wird das zu untersuchende Fluid in eine Messkammer eingeleitet, an deren einem Ende eine Lichtquelle, und an deren anderem Ende ein Lichtsensor vorgesehen ist. Die Lichtquelle sendet einen Lichtstrahl durch die Messkammer, der auf den Lichtsensor trifft. Die Intensität des auf den Lichtsensor treffenden Lichtstrahls ist abhängig von der Trübung des Fluids. Je höher die Opazität des Fluids, desto geringer ist die Lichtintensität des Lichtstrahls am Lichtsensor, und desto schwächer ist damit der Pegel des Ausgangssignals des Lichtsensors. Das Dokument DE-A- 43 15 152 offenbart eine Vorrichtung zur Untersuchung eines Gases. Wird das Opazimeter zur Untersuchung von Kraftfahrzeug-Abgasen eingesetzt, sollte das Opazimeter regelmäßig gereinigt werden, da Verschmutzungspartikel (wie Ruß), die im Abgas enthalten sind, die Lichtquelle, den Lichtsensor oder andere Komponenten, die zum Führen des Fluids durch die Messkammer eingesetzt werden, verschmutzen. Regelmäßiges Reinigen des Opazimeters ist jedoch kostspielig.

Die der Erfindung zugrunde liegende Aufgabe ist, ein Opazimeter der eingangsgenannten Art so weiterzuentwickeln, dass die Kosten, die durch das Reinigen des Opazimeters entstehen, verringert werden können.

Zur Lösung dieser Aufgabe stellt die Erfindung eine Messzelle gemäß Patentanspruch 1 sowie ein Opazimeter gemäß Patentanspruch 15 bereit. Vorteilhafte Ausgestaltungen beziehungsweise Weiterbildungen des Erfindungsgedankens finden sich in den Unteransprüchen.

Gemäß einem Aspekt der Erfindung weist eine Messzelle eine Messkammer auf, in die ein zu untersuchendes Fluid einleitbar ist. Weiterhin ist eine Einrichtung zur Aufnahme einer Lichtquelle, die an einem ersten Ende der Messkammer angeordnet ist, und eine Einrichtung zur Aufnahme eines Lichtsensors, die an einem zweiten, dem ersten Ende gegenüberliegenden Ende der Messkammer angeordnet ist, vorgesehen, derart, dass ein von der Lichtquelle in die Messkammer ausgesandter Lichtstrahl auf den Lichtsensor trifft. Die Messzelle weist einen Auslass und ein Einlass auf, die beide in der Nähe des ersten Endes oder beide in der Nähe des zweiten Endes der Messkammer angeordnet sind, wobei der Auslass dem Zentrum der Messkammer näher ist als der Einlass. Die Messzelle weist weiterhin eine Pumpeinrichtung auf, mittels der Fluid über den Auslass aus der Messkammer absaugbar ist. Des Weiteren weist die Messzelle eine Filtereinrichtung auf, mittels der Partikel, die eine Verschmutzung der Messkammer beziehungsweise weiterer Komponenten der Messzelle bewirken können, aus dem durch die Pumpeinrichtung über den Auslass abgesaugten Fluid filterbar sind, um ein gefiltertes Fluid zu erhalten, wobei mittels der Pumpeinrichtung wenigstens ein Teil des gefilterten Fluids über den Einlass wieder in die Messkammer einspeisbar ist.

Mit anderen Worten: Ein Teil des zu untersuchenden Fluids wird der Messkammer entnommen, gefiltert, und das gefilterte Fluid wieder in die Messkammer eingespeist. Dadurch, dass der Einlass näher am ersten Ende bzw. am zweiten Ende liegt als der Auslass, wird bewirkt, dass unmittelbar am ersten Ende der Messkammer bzw. unmittelbar am zweiten Ende der Messkammer nur gefiltertes Fluid vorhanden ist, dass heißt Fluid, das die Lichtquelle bzw. den Lichtsensor nicht verschmutzen kann. Dadurch, dass die unmittelbare Umgebung der Lichtquelle bzw. des Lichtsensors nur bzw. hauptsächlich mit gefiltertem Fluid gefüllt ist, wird verhindert, dass zu untersuchendes Fluid, das die Verschmutzungspartikel enthält, nicht in den Bereich der Lichtquelle bzw. des Lichtsensors gelangen kann. Das gefilterte Fluid wirkt somit wie eine Barriere ("Luftvorhang"), d.h. wie eine Schutzschicht, die sich um die Lichtquelle bzw. den Lichtsensor legt. Auf diese Art und Weise können herkömmliche mechanische Schutzelemente zum Schutz von Lichtquelle bzw. den Lichtsensor wie beispielsweise Quarzscheiben vermieden werden.

Die Schutzfunktion des gefilterten Fluids für die Lichtquelle bzw. den Lichtsensor kann insbesondere dann für einen längeren Zeitraum aufrechterhalten werden, wenn das gefilterte Fluid so in die Messkammer eingespeist wird, dass es laufend vom Einlass in Richtung des Auslasses fließt. Auf diese Art und Weise kann ein laminarer Strom gereinigten Fluids erzeugt werden, der von einem Ende der Messkammer ins Zentrum der Messkammer gerichtet ist und eine Diffusion des zu untersuchenden Fluids (das die Verschmutzungspartikel enthält) in Richtung der Enden der Messkammer wirksam unterbindet. Der in das Innere der Messkammer gerichtete Fluidstrom aus gereinigtem Fluid sollte so verlaufen, dass dieser durch den Auslass erneut abgesaugt wird, um zu verhindern, dass das zu untersuchende Fluid zu stark verdünnt wird, was zu einer Verfälschung der Opazitätsmessung führen würde (die Verschmutzungspartikel "fehlen" im Strom gereinigten Fluids).

In der Messkammer kann eine erste Blende vorgesehen sein, die zwischen dem Auslass und dem Einlass angeordnet ist und die eine Öffnung aufweist, durch die das gefilterte Fluid in Richtung des Auslasses strömt, und durch die der Lichtstrahl hindurch verläuft. Auf diese Art und Weise braucht der Fluidstrom aus gereinigtem Fluid nicht den gesamten Querschnitt der Messkammer auszufüllen, um die Lichtquelle bzw. den Lichtsensor zu schützen. Vielmehr ist es ausreichend, wenn der Fluidstrom gereinigten Fluids den Querschnitt der Öffnung der ersten Blende voll ausfüllt. Damit reicht ein kleinerer Fluidstrom gereinigten Fluids für die Schutzfunktion von Lichtquelle bzw. Lichtsensor aus.

Der Fluideinlass der Messzelle, über den das zu untersuchende Fluid in die Messkammer einleitbar ist, befindet sich vorteilhafterwiese an einem Ende der Messkammer, der dem Ende der Messkammer, an dem der Auslass und der Einlass angeordnet sind, gegenüberliegt. Auf diese Art und Weise kann ein Fluidstrom zu untersuchenden Fluids erzeugt werden, der von dem Fluideinlass in Richtung des Auslasses fließt und damit die gesamte Messkammer ausfüllt.

In der Messkammer kann eine zweite Blende vorgesehen sein, die sich in der Nähe des Fluideinlasses befindet, und die so ausgestaltet ist, dass das zu untersuchende Fluid, das über den Fluideinlass in die Messkammer eingeleitet wird, mittels der zweiten Blende in Richtung des Auslasses gelenkt wird. Dadurch, dass das zu untersuchende Fluid mittels der zweiten Blende in Richtung des Auslasses gelenkt wird, und das zu untersuchende Fluid durch den Auslass abgesaugt wird, entsteht ein laminarer Strom zu untersuchenden Fluids, der von der zweiten Blende weg in das Zentrum der Messkammer gerichtet ist. Auf diese Art und Weise kann verhindert werden, dass zu untersuchendes Fluid in Richtung desjenigen Endes der Messkammer diffundiert, in dessen Nähe der Fluideinlass vorgesehen ist. Auf diese Art und Weise kann verhindert werden, dass das zu untersuchende Fluid auf die Lichtquelle bzw. den Lichtsensor trifft (je nachdem, welche dieser Komponenten an diesem Ende der Messkammer angeordnet ist). Somit ist es möglich, sowohl die Lichtquelle als auch den Lichtsensor mit lediglich einem Luftvorhang und ohne die Verwendung teurer Schutzkomponenten wie beispielsweise Quarzgläsern effektiv zu schützen.

Die zweite Blende kann beispielsweise als Scheibe mit einer Öffnung ausgestaltet sein. Zusätzlich kann auf der Scheibe ein rohrförmiger Aufsatz vorgesehen sein, derart, dass das Innere des rohrförmigen Aufsatzes eine Verlängerung der Öffnung der Scheibe bildet, und der Lichtstrahl durch die Öffnung und das Innere des Aufsatzes hindurch verläuft. Der Aufsatz kann dem Zentrum der Messkammer näher sein als die Scheibe, oder umgekehrt. Der Fluideinlass kann dem rohrförmigen Aufsatz gegenüberliegen. Es sei angenommen, dass der rohrförmige Aufsatz von der Scheibe weg in das Innere der Messkammer hineinragt. Wird nun beispielsweise der Fluideinlass so angeordnet, dass das zu untersuchende Fluid seitlich auf den Aufsatz trifft, so wird es durch die Scheibe abgehalten, direkt zum Ende der Messammer zu fließen, und mittels des rohrförmigen Aufsatzes in das Innere der Messkammer umgelenkt. Auf diese Art und Weise kann ein besonders guter Schutz der Lichtquelle bzw. des Lichtsensors erzielt werden. Auf der ersten Blende kann ebenfalls ein solcher Aufsatz vorgesehen sein.

In der vorangehenden Ausführungsform wurde davon ausgegangen, dass ein Auslass und ein Einlass an der Messkammer vorgesehen sind. Jedoch können auch mehrere Auslässe und Einlässe vorgesehen werden. Beispielsweise kann die Messzelle einen ersten Auslass und einen ersten Einlass aufweisen, die beide in der Nähe des ersten Endes der Messkammer angeordnet sind, wobei der erste Auslass dem Zentrum der Messkammer näher ist als der erste Einlass. Weiterhin kann die Messzelle einen zweiten Einlass und einen zweiten Auslass aufweisen, die beide in der Nähe des zweiten Endes der Messkammer angeordnet sind, wobei der zweite Auslass dem Zentrum der Messkammer näher ist als der zweite Einlass. In dieser Ausführungsform ist mittels der Pumpeinrichtung Fluid über den ersten Einlass und über den zweiten Auslass aus der ersten Messkammer absaugbar, und mittels der Filtereinrichtung Partikel, die eine Verschmutzung der Messkammer bzw. anderer Komponenten der Messzelle bewirken können, aus dem durch die Pumpeinrichtung über den ersten Auslass und den zweiten Auslass abgesaugten Fluid filterbar, um ein gefiltertes Fluid zu erhalten. Mittels der Pumpeinrichtung kann wenigstens ein Teil des gefilterten Fluids über den ersten Einlass und den zweiten Einlass wieder in die Messkammer eingespeist werden. In dieser Ausführungsform kann der Fluideinlass beispielsweise mittig an der Messkammer angebracht sein, sodass der Fluideinlass denselben Abstand zum ersten Auslass und zum zweiten Auslass aufweist. Der Fluideinlass kann auch an einer anderen Stelle zwischen dem ersten Anlass und dem zweiten Auslass angeordnet sein.

In dieser Ausführungsform kann in der Messkammer eine erste Blende vorgesehen sein, die zwischen dem ersten Auslass und dem Einlass eingeordnet ist, und die eine Öffnung aufweist, durch die das gefilterte Fluid von dem ersten Einlass in Richtung des ersten Auslasses strömt, und durch die der Lichtstrahl hindurch verläuft. Weiterhin kann in der Messkammer eine zweite Blende vorgesehen sein, die zwischen dem zweiten Auslass und dem zweiten Einlass angeordnet ist, und die eine Öffnung aufweist, durch die das gefilterte Fluid von dem zweiten Einlass in Richtung des zweiten Auslasses strömt, und durch die der Lichtstrahl hindurch verläuft. In dieser Ausführungsform werden somit zwei Luftvorhänge verwendet, wobei jeder der Luftvorhänge eine der Komponenten Lichtquelle oder Lichtsensor vor Verunreinigungen durch die Verschmutzungspartikel, die sich in dem zu untersuchenden Fluid befinden, schützt.

Die Pumpeinrichtung kann ein oder mehrere Steuerelemente (z.B. Drosseleinrichtungen) aufweisen, mittels derer einstellbar ist, welcher Anteil des gefilterten Fluids wieder in die Messkammer eingespeist wird.

Generell sollten die Luftvorhänge so ausgestaltet sein, dass der Anteil des gefilterten Fluids, der wieder in die Messkammer eingespeist wird, bezüglich des abgesaugten Fluids so austariert wird, dass das zu untersuchende Fluid nicht oder nur zum vernachlässigbaren Anteil zu der Lichtquelle oder zu dem Lichtsensor gelangen kann, andererseits aber keine zu starke Verdünnung des zu untersuchenden Fluids durch das eingespeiste gefilterte Fluid erflogt. Eine derartige Einstellung des Anteils des gefilterten Fluids kann beispielsweise über Steuerelemente wie Drosseleinrichtungen erfolgen, die in der Pumpeinrichtung vorgesehen sind.

Die Steuerelemente können (über eine Steuer-/Regelschaltung) ansteuerbar ausgestaltet sein, derart, dass der Anteil des gefilterten Fluids, der wieder in die Messkammer eingespeist wird, durch die Ansteuerung mittels der Steuer-/Regelschaltung je nach Bedarf variiert werden kann. Damit ist es möglich, nach Bedarf das gereinigte Fluid zu unterschiedlichen Zwecken einzusetzen: Beispielsweise kann der Anteil des gefilterten Fluids, der wieder in die Messkammer eingespeist wird, in einem Säuberungsmodus so erhöht werden (bis auf 100%), dass mittels des gefilterten Fluids eine Säuberung des Bereichs der Messkammer zwischen einem Auslass und dem Ende, an dem sich der Auslass befindet (also um den Einlass herum), erfolgt. Die Menge des die Messkammer eingespeisten Fluids kann also zum Säubern entsprechend erhöht werden, gleichzeitig kann optional oder alternativ die Strömungsgeschwindigkeit des gesäuberten Fluids erhöht werden durch entsprechende Ansteuerung der Pumpe, sodass eine ausreichende Säuberungskraft erzielt wird.

Gemäß einem Aspekt der Erfindung wird eine Messzelle bereit gestellt, die aufweist: eine Trägerstruktur, die eine Einrichtung zur Aufnahme einer Lichtquelle und eine Einrichtung zur Aufnahme eines Lichtsensors aufweist; eine Messkammer, in die ein zu untersuchendes Fluid einleitbar ist, und die ein Messkammergehäuse aufweist, wobei die Einrichtung zur Aufnahme der Lichtquelle ein erstes Ende des Messkammergehäuses, und die Einrichtung zur Aufnahme des Lichtsensors ein zweites Ende des Messkammergehäuses bilden, derart, dass ein von der Lichtquelle in die Messkammer ausgesandter Lichtstrahl den Lichtsensor trifft; und eine an oder in der Trägerstruktur vorgesehene Führung, entlang der sich ein Teil eines Messkammergehäuses relativ zu der Trägerstruktur bewegen kann, derart, dass im Fall einer thermischen Ausdehnung des beweglichen Teils des Messkammergehäuses eine Krafteinwirkung des Messkammergehäuses auf die Trägerstruktur so weit wie möglich vermieden wird.

Mit anderen Worten: ein Teil des Messkammergehäuses (der "bewegliche Teil", vorteilhafterweise ein Teil, der sich besonders stark thermisch ausdehnt) wird vom Rest des Messkammergehäuses mechanisch entkoppelt. Die Entkopplung erfolgt dadurch, dass der bewegliche Teil gegenüber dem Rest des Messkammergehäuses so bewegbar (beispielsweise verschiebbar) ist, dass während des Verschiebens ein Kraftaustausch zwischen dem beweglichen Teil des Messkammergehäuses und der dem Rest des Messkammergehäuses unterbleibt bzw. dieser so gering ist, dass eine Verbiegung/Verdrillung/Ausdehnung der Messkammer als Ganzes verhindert werden kann. Dadurch kann eine Variation des Abstands zwischen der Lichtquelle und dem Lichtsensor sowie einer relativen Ausrichtung der Lichtquelle und des Lichtsensors zueinander während der thermischen Ausdehung des Messkammergehäuses verhindert oder gering gehalten werden. Die Krafteinwirkung des beweglichen Teils des Messkammergehäuses auf die Trägerstruktur sollte zumindest so gering sein, dass eine draus resultierende Änderung des Abstand zwischen der Lichtquelle und dem Lichtsensor oder der relativen Ausrichtung der Lichtquelle bezüglich des Lichtsensors für die Messgenauigkeit der Messzelle vernachlässigbar ist.

Der bewegliche Teil des Messkammergehäuses ist vorteilhafterweise ein zentraler Teil des Messkammergehäuses, der sich gegenüber den beiden äußeren Teilen (den Einrichtungen zur Aufnahme von Lichtquelle und Lichtsensor) des Messkammergehäuses verschiebbar ist. Je länger der bewegliche Teil des Messkammergehäuses gegenüber dem Rest des Messkammergehäuses ist, umso unempfindlicher ist die Messzelle gegenüber thermischen Ausdehnungen.

Der gewünschte Effekt, dass der Abstand und die relative Ausrichtung von Lichtquelle und Lichtsensor zueinander während der thermischen Ausdehnung des Messkammergehäuses nicht beziehungsweise nur wenig variieren, kann vorteilhafterweise noch dadurch gesteigert werden, dass das Material der Trägerstruktur so gewählt wird, dass die Trägerstruktur einen geringen Wärmeausdehnungskoeffizienten aufweist. In diesem Fall bildet die Trägerstruktur gewissermaßen eine starre "Klammer", die sich bei der Beheizung der Messkammer nicht oder so gut wie nicht ausdehnt und damit den Abstand und die relative Ausrichtung der Lichtquelle und des Lichtsensors zueinander konstant hält. Die Ausdehung des Messkammergehäuses kann somit auf den beweglichen Teil beschränkt werden, der sich relativ zur Klammer bewegen kann, ohne auf eine Klammer eine Kraft auszuüben. Beispielsweise kann das Material der Trägestruktur aus einem Kunststoff mit geringem Wärmeausdehnungskoeffizienten, beispielsweise CFK, oder einem Stahl mit geringem Wärmeausdehnungskoeffizienten (beispielsweise Invarstahl) bestehen oder wenigstens zum Teil bestehen.

Der bewegliche Teil des Messkammergehäuses kann beispielsweise als zylinderförmiges Messrohr ausgestaltet sein. Die Erfindung ist jedoch nicht darauf beschränkt, der bewegliche Teil des Messkammergehäuses könnte beispielsweise auch eine rechteckige oder vieleckige Form aufweisen. Die Verwendung eines zylindrischen Messrohes hat jedoch den Vorteil, dass bei einem thermischen Ungleichgewicht im Messrohr resultierende thermische Verspannungen des Messrohrs auf ein Minimum beschränkt bleiben, d. h. die thermische Ausdehnung des Messrohrs in homogener Art und Weise erfolgt. Damit kann wiederum eine inhomogene Krafteinwirkung des Messrohrs auf die Trägerstruktur vermieden oder reduziert werden, womit die Messgenauigkeit weiter verbessert wird. Wird die Trägerstruktur als Trägerohr ausgestaltet, das konzentrisch um das Messrohr herum angeordnet ist und die Einrichtung zur Aufnahme der Lichtquelle mit der Einrichtung zur Aufnahme des Lichtsensors verbindet, kann der stabilisiernde Effekt noch erhöht werden, da die gesamte Verbundstruktur zwischen den Einrichtungen zur Aufnahme der Lichtquelle und Aufnahme des Lichtsensors eine rotationssymmetrische Architektur aufweist. Selbst wenn in diesem Fall eine Kraftübertragung vom Messrohr auf das Trägerohr erfolgt, oder wenn das Trägerrohr aufgrund der Heizung der Messkammer selbst erwärmt wird, kann durch die rotationssymmetrische Architektur Verbundstruktur eine Variation des Abstands bzw. der relativen Ausrichtungen der Lichtquelle zum Lichtsensor weitgehend vermieden werden. Unter Umständen ist bei Verwendung einer rotationssymmetrischen Verbundstruktur die Verwendung eines Trägerstrukturmaterials mit geringem Wärmeausdehnungskoeffizienten nicht notwendig.

Der bewegliche Teil des Messkammergehäuses kann beispielsweise über elastische Dichtungselemente mit der Trägerstruktur verbunden sein, die das Innere der Messkammer gegenüber der Umgebung der Messkammer abdichten. Die Dichtungselemente erfüllen in diesem Fall eine Doppelfunktion: die Dichtungselemente ermöglichen eine Relativbewegung des beweglichen Teils des Messkammergehäuses gegenüber der Trägerstruktur (indem sich Dichtungselemente mit der Bewegung des beweglichen Teils mitdehnen), zusätzlich wird die Messkammer gegenüber der Umgebung abgedichtet. Die Dichtungselemente sindt insbesondere dann vorteilhaft, wenn das zu untersuchende Fluid mittels einer Pumpe in die Messkammer gepumpt beziehungsweise durch die Messkammer hindurch gepumpt wird. In diesem Fall würde ohne Abdichtung des Inneren der Messkammer gegenüber der Umgebung das zu untersuchende Fluid der Messkammer mit Umgebungsluft verdünnt werden (durch die Sogwirkung der Pumpe, die Umgebungsluft durch undichte Stellen in das Innere der Messkammer saugt), womit das Messergebnis verfälscht werden würde. Anstelle der elastische Dichtungselemente kann der bewegliche Teil des Messkammergehäuses auch über elastische Elemente ohne Dichtungsfunktion mit der Trägerstruktur verbunden sein.

Die Dichtungselemente können bei Verwendung eines Messrohres beispielsweise 0-förmige Ringe sein, die jeweils einen Teil der Außenfläche des Messrohres umschließen, d. h. jeweils ganz um das Messrohr herumlaufen.

Das Aufwärmen der Trägerstruktur kann dadurch vermieden bzw. reduziert werden, in dem zwischen dem Messrohr und dem Trägerrohr ein isolierndes Material vorgesehen ist. Damit wird die Empfindlichkeit der Messzelle gegenüber Temperaturschwankungen der Messkammer weiter reduziert. Außerdem hat das isolierende Material den Vorteil, dass die Messkammer beim Beheizen weniger Wärme verliert, womit der Heizvorgang schneller durchgeführt werden kann und die Messzelle nach Inbetriebnahme schneller für die Messung bereit steht.

Die Trägerstruktur kann ein erstes Halteelement aufweisen, das an einem ersten Ende des Trägerrohrs vorgesehen ist, und das einen ersten Teil der Führung zum Führen des ersten Ende des Messrohres aufweist. Ferner kann die Trägerstruktur ein zweites Halteelement aufweisen, das an einem zweiten Ende des Trägerrohrs vorgesehen ist, und das einen zweiten Teil der Führung zum Führen des zweiten Endes des Messrohres aufweist. In dieser Ausführungsform wird das Trägerrohr somit an dessen Enden von der Trägerstruktur gehalten.

Um das Trägerrohr zu halten, kann beispielsweise im ersten Halteelement eine erste Aussparung ausgebildet sein (beispielsweise eine zylindrische Aussparung), in der das erste Ende des Messrohres entlang einer Längsachse des Messrohres verschiebbar gelagert ist. Analog kann im zweiten Halteelement eine zweite Aussparung (beispielsweise eine zylindrische Aussparung) ausgebildet sein, in der das zweite Ende des Messrohres entlang der Längsachse des Messrohres verschiebbar gelagert ist. Der thermischen Ausdehnung des Messrohres wird damit Rechnung getragen, in dem innerhalb der Aussparungen Platz verfügbar ist, in dem sich das Messrohr hinein dehnen kann.

Das erste Halteelement kann beispielsweise an seinem dem Trägerrohr zugewandten Ende eine zylinderförmige Außenfläche aufweisen, die in das Trägerrohr (das erste Ende des Trägerrohrs) einpassbar ist. Analog kann das dem Trägerrohr zugewandte Ende des zweiten Halteelements eine zylinderförmige Außenfläche aufweisen, die in das Trägerrohr (das zweite Ende des Trägerrohrs) eingepasst ist. In dieser Ausführungsform weisen somit auch die Halteelemente einen rotationssymmetrischen Aufbau auf, was, den positiven Einfluss auf die Messgenauigkeit der Messzelle verstärkt.

Die Einrichtung zur Aufnahme der Lichtquelle kann mit dem ersten Halteelement einstückig ausgebildet und die Lichtquelle wenigstens teilweise in der ersten Aussparung vorgesehen sein, derart, dass sie dem ersten Ende des Messrohres gegenüberliegt. Analog kann die Einrichtung zur Aufnahme des Lichtsensors mit dem zweiten Halteelement einstöckig ausgebildet und der Lichtsensor wenigstens teilweise in der zweiten Aussparung vorgesehen sein, derart, dass dieser dem zweiten Ende des Messrohres gegenüberliegt. Auf diese Art und Weise kann ein kompakter Gesamtaufbau der Messzelle realisiert werden. Auch die Montage der Messzelle wird dadurch erleichtert.

Die Messkammer kann beispielsweise Beheizen des Messkammergehäuses selbst oder durch eine innerhalb der Messkammer vorgesehene Heizeinrichtung, beispielsweise eine Heizwendel. Damit das Messkammergehäuse schnell aufgeheizt werden kann, kann dieses beispielsweise dünnwandig ausgestaltet sein, z. B. aus dünnwandigem Stahl.

Gemäß einem Aspekt der Erfindung kann die Messzelle weiterhin mit einer Regeleinheit versehen sein, mittels derer eine Abstrahlleistung der Lichtquelle so nachregelbar ist, dass eine Stärke eines Ausgangssignals des Lichtsensors bei Abwesenheit von Fluid in der Messkammer unabhängig vom Grad der Verschmutzung der Messkammer (beispielsweise eine Verschmutzung einer Oberfläche der Lichtquelle oder einer Oberfläche des Lichtsensors oder eine Verschmutzung von fluidführenden Komponenten) einem bestimmten Wert entspricht. Auf diese Art und Weise kann das Wartungsintervall der Messzelle verlängert werden. Eine Verschmutzung beispielsweise der Oberfläche der Lichtquelle oder der Oberfläche des Lichtsensors kann demnach vollständig kompensiert werden, solange es möglich ist, durch Erhöhung der Abstrahlleistung der Lichtquelle die Stärke des Ausgangssignals des Lichtsensors bei Abwesenheit Fluid in der Messkammer (d. h. keine Opazität) auf einem bestimmten Wert zu halten.

Unter "Stärke" des Ausgangssignals wird hierbei insbesondere der Signalpegel des Ausgangssignals verstanden. D. h., erhöht sich die Intensität des Lichtstrahls am Lichtsensor, so erhöht sich der Signalpegel des Ausgangssignals, wohingegen sich der Signalpegel des Ausgangssignals abschwächt, sobald sich die Lichtintensität am Lichtsensor abschwächt.

Die Nachregelung kann beispielsweise so erfolgen, dass bei Abwesenheit von Fluid in der Messkammer (keine Opazität) die Stärke des Ausgangsignals des Lichtsensors einem Maximalwert eines Lichtsensor-Ausgangsignalspektrums entspricht. Damit ist gewährleistet, dass unabhängig vom Grad der Verschmutzung der Lichtquelle und des Lichtsensors immer die maximale Bandbreite des Lichtsensor-Ausgangsignalpegels zur Verfügung steht, wodurch die Messgenauigkeit (Auflösung) konstant maximal gehalten werden kann.

Die Nachregelung kann beispielsweise bei Betriebnahme der Messzelle erfolgen, bevor das zu untersuchende Fluid in die Messkammer eingeleitet wird. Zu diesem Zeitpunkt ist es nämlich möglich, zu testen, wie groß der Grad der Verschmutzung ist, da bekannt ist, mit welcher Lichtintensität der Lichtstrahl auf den Lichtsensor treffen sollte.

Die Lichtquelle kann beispielsweise als LED ausgestaltet sein. Beispielsweise kann die Lichtquelle als eine rotes Licht emittierende LED ausgestaltet sein.

Die Erfindung wird im Folgenden unter Bezugnahme auf die Figuren in beispielsweiser Ausführungsform näher erläutert. Es zeigen:
Figur 1 eine schematische Querschnittsdarstellung einer ersten erfindungsgemäßen Ausführungsform einer Messzelle;
Figur 2 eine schematische Querschnittsdarstellung einer zweiten erfindungsgemäßen Ausführungsform einer Messzelle; und
Figur 3 eine schematische Querschnittsdarstellung einer dritten erfindungsgemäßen Ausführungsform einer Messzelle.

In den Figuren sind einander entsprechende Bereiche, Bauteile oder Bauteilgruppen mit denselben Bezugsziffern gekennzeichnet.

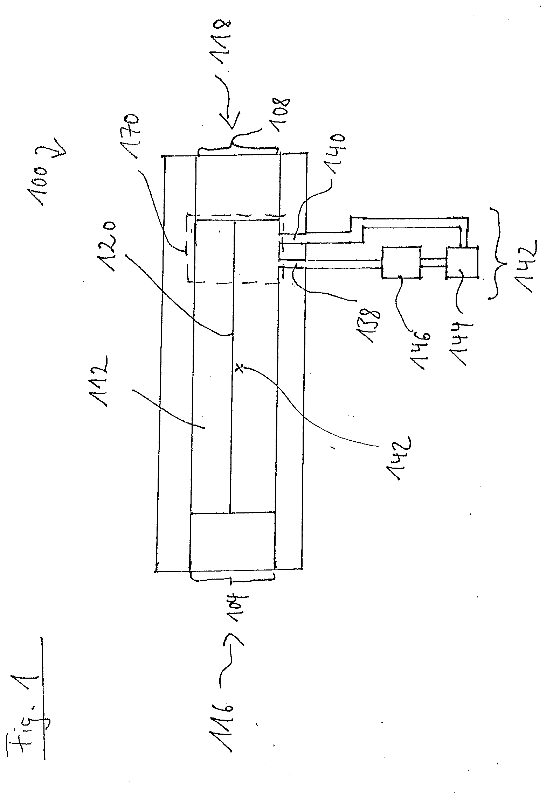

Figur 1 zeigt eine Prinzipskizze einer Messzelle 100. Die Messzelle 100 weist eine Messkammer 112 auf, in die ein zu untersuchendes Fluid einleitbar ist. Weiterhin ist eine Einrichtung 104 zur Aufnahme einer Lichtquelle, die an einem ersten Ende 116 der Messkammer 112 angeordnet ist, und eine Einrichtung 108 zur Aufnahme eines Lichtsensors, die an einem zweiten, dem ersten Ende gegenüberliegenden Ende 118 der Messkammer 112 angeordnet ist, vorgesehen, derart, dass ein von der Lichtquelle in die Messkammer 112 ausgesandter Lichtstrahl 120 auf den Lichtsensor trifft. Die Messzelle 100 weist einen Auslass 138 und einen Einlass 140 auf, die beide in der Nähe des ersten Endes 116 oder beide in der Nähe des zweiten Endes 118 der Messkammer 112 angeordnet sind, wobei der Auslass 138 dem Zentrum 142 der Messkammer 112 näher ist als der Einlass 140. Die Messzelle 100 weist eine Pumpe 144 auf, mittels der Fluid über den Auslass 138 aus der Messkammer 112 absaugbar ist. Des Weiteren weist die Messzelle 100 eine Filtereinrichtung 146 auf, mittels der Partikel, die eine Verschmutzung der Messkammer 112 beziehungsweise weiterer Komponenten der Messzelle 100 bewirken können, aus dem mittels der Pumpe 144 über den Auslass 138 abgesaugten Fluid filterbar sind, um ein gefiltertes Fluid zu erhalten, wobei mittels der Pumpe 144 wenigstens ein Teil des gefilterten Fluids über den Einlass 140 wieder in die Messkammer 112 einspeisbar ist. Die Filtereinrichtung 146 kann auch zwischen der Pumpe 144 und dem Einlass 140 angeordnet sein. Das über den Einlass 140 in die Messkammer 112 eingespeiste gereinigte Fluid schützt einen Bereich 170 vor dem zu untersuchenden Fluid in der Messkammer 112 durch einen "Luftvorhang" (indem das eingespeiste gereinigte Fluid den Bereich 170 ausfüllt).

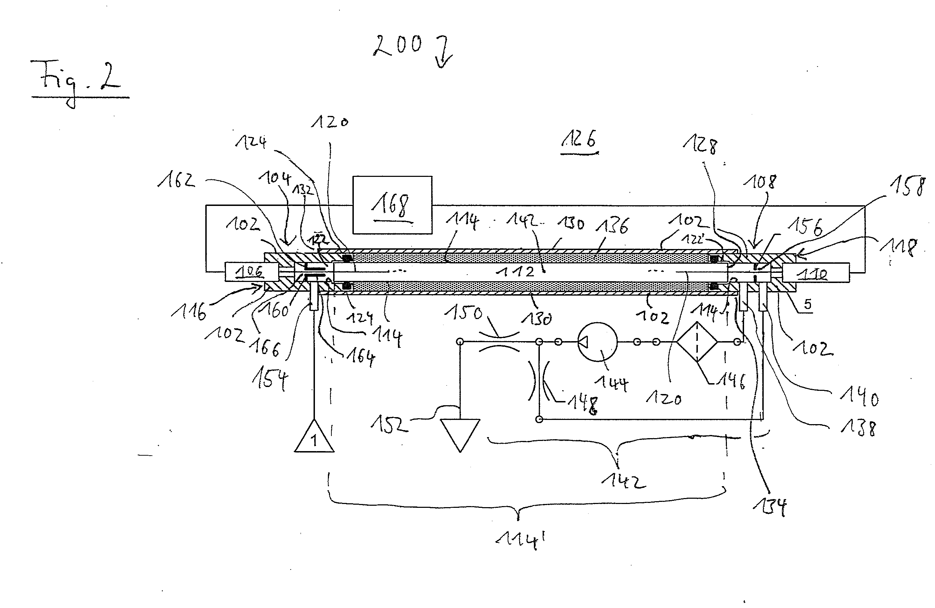

Figur 2 zeigt eine Messzelle 200, die eine mögliche Realisierung der in Figur 1 gezeigten Prinzipskizze darstellt.

Die Messzelle 200 weist eine Trägerstruktur 102 auf, die ihrerseits eine Einrichtung 104 zur Aufnahme einer Lichtquelle 106 und eine Einrichtung 108 zur Aufnahme eines Lichtsensors 110 aufweist. Die Messzelle 200 weist weiterhin eine Messkammer 112 auf, in die ein zu untersuchendes Fluid einleitbar ist. Die Messkammer 112 weist ein Messkammergehäuse 114 auf, wobei die Einrichtung 104 zur Aufnahme der Lichtquelle 106 ein erstes Ende 116 des Messkammergehäuses 114, und die Einrichtung 108 zur Aufnahme des Lichtsensors 110 ein zweites Ende 118 des Messkammergehäuses 114 bilden. Ein von der Lichtquelle 106 in die Messkammer 112 ausgesandter Lichtstrahl 120 trifft auf den Lichtsensor 110. An der Trägerstruktur 102 ist eine Führung (Innenwände der in der Einrichtung 104 ausgebildeten Aussparung 122 sowie Innenwände der in Einrichtung 108 ausgebildeten Ausspannungen 122' sowie elastische Dichtungselemente 124) vorgesehen, entlang der sich ein Teil 114' des Messkammergehäuses 114 relativ zu der Trägerstruktur 102 bewegen kann, derart, dass im Falle einer thermischen Ausdehnung des beweglichen Teils 114' des Messkammergehäuses 114 eine Krafteinwirkung desselben auf die Trägerstruktur 102 soweit wie möglich vermieden wird.

Das Messkammergehäuse 114 wird durch mehrere Komponenten gebildet: zum einen aus Begrenzungswänden, die in der Trägerstruktur 102 selbst ausgebildet sind (z.B. die der Messkammer 112 zugewandten Wände der Einrichtungen 104, 108), andererseits die Innenwände des Gehäuseteils 114' (beweglicher Teil des Messkammergehäuses), der kein Teil der Trägerstruktur 102 ist.

Der bewegliche Teil 114' des Messkammergehäuses 114 ist in dieser Ausführungsform über elastische Dichtungselemente 124 mit der Trägerstruktur 102, genauer gesagt mit der Einrichtung 104 und der Einrichtung 108 der Trägerstruktur 102 verbunden. Die elastischen Dichtungselemente 124 sind in dieser Ausführungsform Dichtungsringe, die um die Außenseite des beweglichen Teils 114' des Messgehäuses 114 herum verlaufen und in Rillen eingepasst sind, die in der Innenwand der Einrichtung 104 und in der Innenwand der Einrichtung 104 ausgebildet sind.

In dieser Ausführungsform ist der bewegliche Teil 114' des Messkammergehäuses 114 als zylinderförmiges Messrohr 128 ausgestaltet. Weiterhin weist die Trägerstruktur 102 in dieser Ausführungsform ein Trägerrohr 113 auf, das ebenfalls zylinderförmig ausgestaltet ist und konzentrisch um das Messrohr 128 herum angeordnet ist. Das Trägerrohr 130 verbindet die Einrichtung 104 zur Aufnahme der Lichtquelle 106 mit der Einrichtung 108 zur Aufnahme des Lichtsensors 110 (vorzugsweise möglichst starr). Die Verbindung erfolgt dadurch, dass ein der Lichtquelle abgewandtes Ende der Einrichtung 104 sowie ein dem Lichtsensor 110 abgewandtes Ende der Einrichtung 108 jeweils eine zylinderförmige Außenfläche aufweisen. Die zylinderförmige Außenfläche des der Lichtquelle 106 abgewandten Endes der Einrichtung 104 ist in ein erstes Ende 132 des Trägerrohres 130 eingepasst, und das den Lichtsensor 110 abgewandte Ende der Einrichtung 108 ist in ein zweites Ende 134 des Trägerrohres 130 eingepasst. Zwischen dem Messrohr 128 und dem Trägerrohr 130 ist ein isolierendes Material 136 vorgesehen, dass das Messrohr 128 gegenüber dem Trägerrohr 130 thermisch isoliert.

Die elastischen Dichtungselemente 124 bewirken auch (neben ihrer Funktion als Führung), dass das Innere der Messkammer 112 luftdicht gegenüber der Umgebung 126 der Messzelle 200 abgedichtet ist. Das heißt, die elastischen Dichtungselemente 124 verhindern, dass sich Fluid aus der Messkammer 112 heraus über undichte Stellen zwischen dem Trägerrohr 130 und der Einrichtungen 104/108 in die Umgebung 126 der Messzelle 200 gelangt.

Dadurch, dass der Verbund aus Messrohr 128, Trägerrohr 130, Einrichtung 104, Einrichtung 108 sowie isolierende Material 136 als Ganzes einen rotationssymmetrischen Aufbau aufweist (rotationssymmetrisch um den Lichtstrahl 120, d. h. die Längsachse des Messrohres 128), ist der Verbund und damit die Messzelle 200 unempfindlich gegenüber thermischen Ungleichgewicht innerhalb der Messkammer 112 beziehungsweise innerhalb des Messrohres 128.

Dadurch, dass die Einrichtung 104 gleichzeitig zur Aufnahme zur Lichtquelle 106 (die beispielsweise in die Einrichtung 104 eingeschraubt oder mit dieser verrastet werden kann) sowie zur Führung des Trägerrohres 128 dient (indirekt über die elastischen Dichteelemente 124), kann die Messzelle 200 äußerst kompakt ausgestaltet werden, da nicht getrennte Einrichtungen zum Halten der Lichtquelle 106 sowie zum Halten des Messrohres 128 benötigt werden. Weiterhin gestaltet sich die Montage der Messzelle 200 einfach, da die Einrichtung 104 bereits im Vornherein mit der Lichtquelle 106 bestückt werden kann und das Gesamtmodul als Ganzes auf einfach Art und Weise mit dem Trägerrohr 130 verbunden werden kann, in dem das Gesamtmodul einfach in das Ende 132 des Trägerrohres eingesteckt wird. Analoge Überlegungen gelten auch für die Einrichtung 108 und den Lichtsensor 110 (der beispielsweise in die Einrichtung 108 eingeschraubt oder mit dieser verrastet werden kann).

In dieser Ausführungsform sind nahe des zweiten Endes 118 der Messkammer 112 ein Auslass 138 sowie ein Einlass 140 vorgesehen. Der Auslass 138 ist einem Zentrum 142 der Messkammer 112 näher als der Einlass 140. Weiterhin ist eine Pumpeinrichtung 142 vorgesehen, mittels der Fluid über den Auslass 138 aus der Messkammer 112 absaugbar ist. Die Pumpeinrichtung 142 weist eine Pumpe 144 sowie einen Filter 146 auf. Der Eingang des Filters 146 ist mit dem Ausgang des Auslasses 138 verbunden. Der Ausgang des Filters 146 ist mit dem Eingang der Pumpe 144 verbunden. Der Ausgang der Pumpe 144 ist über ein erstes Steuerelement, beispielsweise eine Drossel 148 mit dem Eingang des Einlasses 140 verbunden. Der Ausgang der Pumpe 144 ist weiterhin über ein zweites Steuerelement 140 (beispielsweise eine Drossel) mit einem Fluidauslass 152 verbunden. Der Fluidauslass 152 kann beispielsweise mit einem Fluideinlass eines weiteren Messgeräts, dass der Messkammer 200 nachgeschaltet ist, verbunden sein. Damit ist es möglich, gleichzeitig und ohne den Einsatz eines weiteren Pumpmechanismus weitere Parameter des in die Messkammer 112 eingespeisten Fluids zu messen (z.B. der CO2-Anteil im Abgas), die durch die Messzelle 200 nicht erfasst werden. Hierzu wird ausgenutzt, dass das Fluid für nachfolgende Messungen wegen des Filters 146 schon vorgefiltert ist (beispielsweise können durch den Filter 146 bereits Rußpartikel (Verschmutzungspartikel, die für die Trübungsmessung relevant sind) aus dem Fluid herausgefiltert werden), und dass das Gasvolumen durch die Rückführung des gereinigten Fluids in die Messkammer 112 über den Einlass 140 konstant bleibt. Die Messzelle 200 weist weiterhin einen Fluideinlass 154 auf, der nahe dem ersten Ende 116 der Messkammer 112 angeordnet ist. Über den Fluideinlass 154 wird das zu untersuchende Fluid in die Messkammer 112 eingespeist.

In der Messkammer 112 ist eine erste Blende 156 vorgesehen, die zwischen dem Auslass 138 und dem Einlass 140 angeordnet ist und die eine Öffnung 158 aufweist, durch die gefiltertes Fluid in Richtung des Auslasses 138 strömen kann, und durch die hindurch der Lichtstrahl 120 verläuft. In der Messkammer 112 ist weiterhin eine zweite Blende 160 vorgesehen, die sich in der Nähe des Fluideinlasses 154 befindet und so ausgestaltet ist, dass zu untersuchendes Fluid, das über den Fluideinlass 154 in die Messkammer 112 eingeleitet wird, durch die zweite Blende 160 in Richtung des Auslasses 138 gelenkt wird. Die zweite Blende 160 weist eine Scheibe mit einer Öffnung 166 auf, auf der ein rohrförmiger Aufsatz 164 vorgesehen ist, derart, dass das Innere des rohrförmigen Aufsatzes 164 eine Verlängerung der Öffnung 166 der Scheibe 162 bildet, und der Lichtstrahl 120 durch die Öffnung 166 und das Innere des Aufsatzes 164 hindurch verläuft. Der Aufsatz 164 ist dem Zentrum 142 der Messkammer näher als die Scheibe 162. Der Fluideinlass 164 liegt dem Aufsatz 164 gegenüber.

Im Folgenden soll die Wirkungsweise der Messzelle 200 näher erläutert werden.

Zunächst wird, falls erforderlich, die Messkammer 112 auf Betriebstemperatur geheizt. Dies kann beispielsweise dadurch erfolgen, dass eine in dem Messkammergehäuse 114 des beweglichen Teils 114' (dem Messrohr 128) befindliche Heizspirale das Messrohr 128 aufheizt. Alternativ wäre es möglich, eine innerhalb der Messkammer 112 vorgesehene Heizspirale zu aktivieren. Nach bzw. während der Aufheizphase der Messkammer 112 wird das zu untersuchende Fluid über den Fluideinlass 154 in die Messkammer 112 geleitet. Das zu untersuchende Fluid wird durch die zweite Blende 160 in Richtung des Zentrums 142 der Messkammer 112 gelenkt. Sofern das ins Zentrum 142 gelenkte zu untersuchende Fluid eine laminare Strömung ist, wird kein bzw. nur ein verschwindend geringer Teil des zu untersuchenden Fluids durch die Öffnung 166 der zweiten Blende 160 zu der Lichtquelle 106 gelangen. Dies bedeutet, dass die Lichtquelle 106 durch die zweite Blende 160 vor dem zu untersuchenden Fluid gut geschützt ist.

Das in die Messkammer 112 eingespeiste zu untersuchende Fluid wird von dem Lichtstrahl 120 durchleuchtet. Je nach Trübung des zu untersuchenden Fluids ist die Intensität des Lichtstrahls 120, die auf den Lichtsensor 110 trifft, stärker oder schwächer. Ein Ausgangssignal des Lichtsensors 110, das heißt ein Signalpegel des Ausgangssignals des Lichtsensors 110 gibt demnach Aufschluss über Ausmaß der Trübung (Opazität) des zu untersuchenden Fluids. Ein Teil des in die Messkammer 112 eingespeisten zu untersuchenden Fluids wird über den Auslass 138 abgesaugt, mittels des Filters 146 gefiltert, wobei ein erster Teil des gefilterten Fluids über das erste Steuerelement 148 dem Einlass 140 zugeführt wird und ein zweiter Teil des gefilterten Fluids über das zweite Steuerelement 150 dem Fluidauslass 152 zugeführt wird. Das Absaugen des Fluids über den Auslass 138 erfolgt mittels der Pumpe 144. Die Menge des durch den Fluidauslass 152 abgeführten Fluids kann beispielsweise der Menge des durch den Fluideinlass 154 in die Messkammer eingespeisten Fluids entsprechen. Dies ist jedoch nicht zwingend der Fall. Beispielsweise kann, nachdem eine gewisse Menge an Fluid in die Messkammer 112 eingeführt wurde, der Fluideinlass 154 geschlossen werden, und das zweite Steuerelement der 150 geschlossen werden, sodass die gleiche Menge, die an Fluid über den Auslass 138 abgesaugt wird, über den Einlass 140 wieder in die Messkammer 112 eingespeist wird. Auf diese Art und Weise bleibt die Gesamtmenge des Fluids innerhalb der Messkammer 112 konstant. Hierbei kann die Menge, die an Fluid über den Auslass 138 pro Zeiteinheit abgesaugt wird und über den Einlass 140 wieder in die Messkammer 112 eingespeist wird, so groß gewählt werden, dass ein Reinigen des Bereichs zwischen dem Einlass 140 und dem Auslass 138 erfolgt. Mit anderen Worten: Durch entsprechendes Ansteuern des ersten und zweiten Steuerelements 148, 150 kann der über den Einlass 140 in die Messkammer 112 eingespeiste Fluidstrom wahlweise zum Ausbilden eines Luftvorhangs (schwacher Fluidstrom, erstes und zweites Steuerelement 148, 150 sind jeweils teilweise geschlossen) oder zum Reinigen des Bereichs zwischen dem Einlass 140 und dem Auslass 138 (starker Fluidstrom, erstes Steuerelement 148 ist vollständig geöffnet, zweites Steuerelement 150 ist vollständig geschlossen) und den Bereich um den Einlass 140 herum (d.h. den Lichtsensor 110) verwendet werden. Generell können die ersten und zweiten Steuerelemente 148, 150 unabhängig voneinander variabel ansteuerbar ausgestaltet sein. Alternativ können die ersten und zweiten Steuerelemente 148, 150 auch nicht-ansteuerbar ausgestaltet sein, d.h. jeweils fest auf einen konstanten Durchlasswert eingestellt sein.

Das über den Einlass 140 in die Messkammer 112 eingespeiste gefilterte Fluid passiert die Öffnung 148 der ersten Blende 156 und bewirkt damit, dass die Öffnung 158 durch einen "Fluidvorhang" verschlossen ist. Das heißt, das in der Messkammer 112 befindliche, zu untersuchende Fluid kann die Öffnung 158 in Richtung des Lichtsensors 110 nicht passieren. Auf diese Art und Weise ist der Lichtsensor 110 gegenüber Schmutzpartikeln, die zur Verschmutzung des Lichtsensors 110 beitragen könnten, geschützt. Vorzugsweise ist die Stärke des gefilterten Luftstroms (Volumen und Stömungsgeschwindigkeit), der die Öffnung 158 der ersten Blende 156 passiert, so eingestellt, dass das durch die Öffnung 158 hindurchgetretene gefilterte Fluid wieder vollständig vom Auslass 138 aus der Messkammer 112 herausgesaugt wird. Damit kann verhindert werden, dass das zu untersuchende Fluid 112 durch das gefilterte Fluid verdünnt wird, d. h. verhindert werden, dass so viele Verschmutzungspartikel aus dem zu untersuchenden Fluid herausgefiltert werden, dass der Messwert der Messzelle 200 nicht mehr verlässlich ist.

Andererseits sollte die Menge des über den Einlass 140 eingespeisten gefilterten Fluids so groß sein, dass die Öffnung 158 durch das gefilterte Fluid wirksam "verschlossen" wird.

Dehnt sich infolge einer Erwärmung das Messrohrs 128 aus, so kann sich ein erstes Ende des Messrohrs 128 in Richtung der zweiten Blende 160, und ein zweites Ende des Messrohrs 128 in Richtung der ersten Blende 156 ausdehnen. Dadurch, dass das Messrohr 128 nach beiden Seiten hin Spiel hat, wird verhindert, dass eine Ausdehnung des Messrohrs 128 an die Trägerstruktur 102 anstößt und damit eine Kraft auf die Trägerstruktur 102 ausübt, die zur Verbiegung oder Verdrillung der Trägerstruktur 102 führen könnte, womit der Abstand zwischen der Lichtquelle 106 und dem Lichtsensor 110 und/oder die relative Ausrichtung der Lichtquelle 106 zum Lichtsensor 110 geändert werden könnte, was zu Messungenauigkeiten (Messwert trifft) führen würde. Die Ausdehnung des Messrohrs 128 wird weiterhin durch die elastischen Dichtungselemente 124 ermöglicht, die sich bei Ausdehnen des Messrohrs 128 mitdehnen, ohne die Dichtung der Messkammer 112 gegenüber der Umgebung 126 zu beinträchtigen.

Unter einer relativen Änderung der gegenseitigen Ausrichtung der Lichtquelle 106 und dem Lichtsensor 110 wird insbesondere verstanden, dass der von der Lichtquelle 106 ausgesandte Lichtstrahl 120 nicht mehr mittig auf den Lichtsensor 110 trifft, wenn dies im Normalzustand der Fall war.

Dadurch, dass zwischen dem Messrohr 128 und dem Trägerrohr 130 ein isolierendes Material 136 vorgesehen ist, heizt sich das Trägerrohr 130 wesentlich weniger, wenn überhaupt, auf als das Messrohr 128. Auf diese Art und Weise kann ein Ausdehnen der Trägerstruktur 102 und eine damit verbundene Änderung des Abstands bzw. der relativen Lage zwischen Lichtquelle 106 und Lichtsensor 110 weiter reduziert werden. Diese Reduzierung bzw. Vermeidung der thermischen Ausdehnung der Trägerstruktur 102 kann noch dadurch verstärkt werden, indem das Material des Trägerrohrs 130 und optional auch der Einrichtung 104 und der Einrichtung 108 so gewählt werden, dass dieses keinen (Wärmeausdehnungskoeffizient Null oder nahe Null) bzw. einen nur sehr geringen Wärmeausdehnungskoeffizient aufweist. Damit kann eine thermische Ausdehnung der Trägerstruktur selbst dann verhindert werden, wenn diese sich erwärmen sollte. Vorteil hierbei ist, dass die Trägerstruktur 102 auch unabhängig wird (hinsichtlich Dehnung, Verbiegung oder Verdrillung) von äußeren Temperatureinflüssen (Umgebung der Messzelle).

Die Messzelle 200 weist weiterhin eine Regeleinheit 168 auf, die mit der Lichtquelle 106 und dem Lichtsensor 110 verbunden ist. Mittels der Regeleinheit 168 ist eine Abstrahlleistung der Lichtquelle 106 so nachregelbar, dass eine Stärke eines Ausgangssignals des Lichtsensors 110 bei Abwesenheit von Fluid in der Messkammer 112 unabhängig vom Grad der Verschmutzung der Messkammer 112 einem bestimmten Wert entspricht. Damit kann insbesondere bewirkt werden, dass eine Verschmutzung einer Oberfläche der Lichtquelle 106 oder einer Oberfläche des Lichtsensors 110 (oder andere Komponenten der Messzelle 200, an denen das Fluid vorbeiströmt/ in Kontakt kommt) die Messgenaugkeit der Messzelle verringert. Erfolgt die Nachregelung so, dass bei Abwesenheit von Fluid in der Messkammer die Stärke des Ausgangssignals des Lichtsensors einem Maximalwert eines Lichtsensor-Ausgangssignalspektrums entspricht, so kann die Empfindlichkeit der Messzelle 200 jederzeit konstant gehalten werden. Die Nachregelung erfolgt vorzugsweise bei Inbetriebnahme der Messzelle, bevor das zu untersuchende Fluid über den Fluideinlass 154 in die Messkammer 112 eingeleitet wird.

Auf diese Art und Weise kann bei Abgasmessungen insbesondere der negative Einfluss von Rußpartikeln auf den Messwert für eine gewisse Zeit unterdrückt werden, womit sich das Wartungsintervall der Messzelle (Säubern der Messzelle) verlängert.

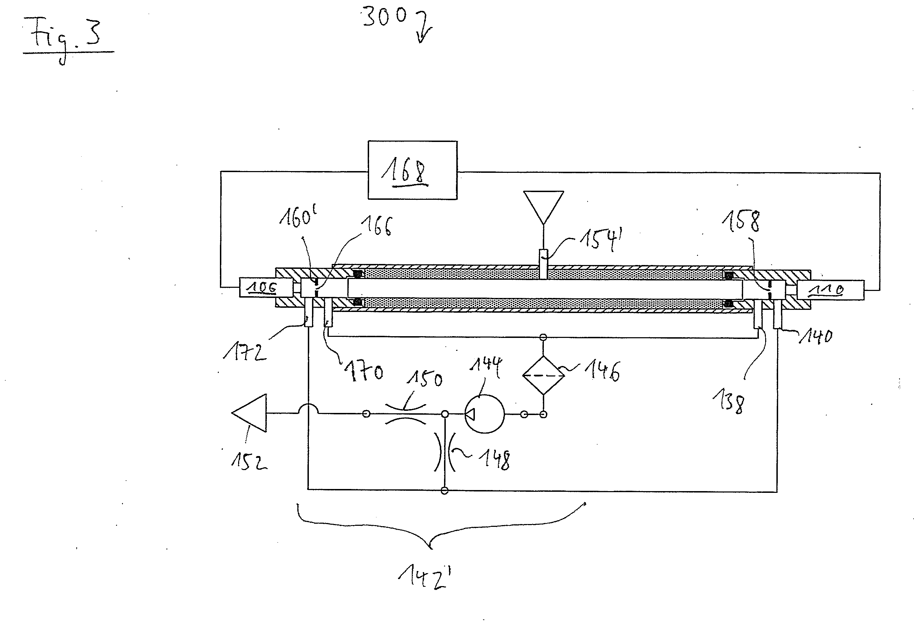

Figur 3 zeigt eine weitere Ausführungsform einer Messzelle 300. Die Messzelle 300 entspricht in ihrem Aufbau im Wesentlichen dem der Messzelle 200, die in Figur 2 gezeigt ist. Jedoch ist in dieser Ausführungsform, zusätzlich zum Auslass 138 (erster Auslass) und zum Einlass 140 (erster Einlass) ein weiterer Auslass 170 (zweiter Auslass) sowie ein weiterer Einlass 172 (zweiter Einlass) vorgesehen. Der zweite Auslass 170 und der zweite Einlass 172 sind in der Nähe des ersten Endes 116 der Messkammer 112 vorgesehen. Die zweite Blende 160 ist durch eine zweite Blende 160' ersetzt, die den gleichen Aufbau wie die erste Blende 156 aufweist. Das heißt, dass die zweite Blende 160' eine Scheibe mit einer Öffnung ist, durch die der Lichtstrahl 120 hindurch verläuft, wobei die Blende 160' zwischen den zweiten Auslass 170 und dem zweiten Einlass 172 angeordnet ist. Weiterhin ist der Eingang des Filters 146 sowohl mit dem Ausgang des ersten Auslasses 138 als auch mit dem Ausgang des zweiten Auslasses 170 verbunden. Der Ausgang der Pumpe 144 ist über das erste Steuerelement 148 sowohl mit dem Eingang des ersten Einlasses 140 als auch mit dem Eingang des zweiten Einlasses 172 verbunden. Der Fluideinlass 154 zum Einbringen des zu untersuchenden Fluids in die Messkammer 122 ist in dieser Ausführungsform mittig zwischen der ersten Blende 156 und der zweiten Blende 160' vorgesehen.

Im Folgenden soll die Funktionsweise der Messzelle 300 näher erläuter werden.

Die Funktionsweise der Messzelle 300 entspricht der der Messzelle 200. Jedoch wird bei der Messzelle 300 das zu untersuchende Fluid mittig in die Messkammer 112 eingeführt, von wo aus es sich dann nach beiden Seiten hin sowohl in Richtung der ersten Blende 156 als auch in Richtung der zweiten Blende 160' ausbreitet. Die Pumpeinrichtung 142' saugt Fluid aus der Messkammer 122 über den ersten Auslass 138 sowie den zweiten Auslass 170 ab. Das durch den Filter 146 gefilterte Fluid wird mittels der Pumpe 144 über das Steuerelement 148 sowohl dem ersten Einlass 140 als auch dem zweiten Einlass 172 zugeführt. Somit tritt ein erster Teil des gefilterten Fluids über den ersten Einlass 140 durch die erste Blende 165 hindurch in Richtung des ersten Auslasses 138. Weiterhin tritt ein zweiter Teil des gefilterten Fluids über den zweiten Einlass 172 und über die zweite Blende 160 in Richtung des zweiten Auslasses 172 geführt. Somit verwendet die Messzelle 300 zwei "Luftvorhänge", einen zum Verschließen der Öffnung 158, und einen zum verschließen der Öffnung 166. Der Fluidauslass 152 kann beispielsweise mit einem Fluideinlass eines weiteren Messgeräts, das der Messzelle 300 nachgeschaltet ist, verbunden sein. Das diesbezüglich im Zusammenhang mit der Messzelle 200 Gesagte gilt hier analog.

In der Messzelle 200 kann die erste Blende 156 auch analog zur zweiten Blende ausgestaltet sein, d.h. einen rohrförmiger Aufsatz aufweisen, derart, dass das Innere des rohrförmigen Aufsatzes eine Verlängerung der Öffnung 158 der Scheibe der ersten Blende 156 bildet, und der Lichtstrahl 120 durch die Öffnung 158 und das Innere des Aufsatzes hindurch verläuft. Der Aufsatz kann wahlweise auf einer der beiden Seiten der Scheibe der ersten Blende 156 angebracht sein. Weiterhin kann alternativ der Aufsatz 164 der zweiten Blende 160 auch auf der anderen, der Lichtquelle 106 zugewandten Seite der Scheibe 162 angeordnet sein. Der Aufsatz 164 der zweiten Blende 160 kann auch weggelassen werden, d.h. die zweite Blende 160 kann lediglich als Scheibe ausgebildet sein.

In der Messzelle 300 können auf den scheibenförmigen ersten und zweiten Blenden 156, 160' (auf jeweils einer der beiden Seiten der Scheibe) zusätzlich Aufsätze vorgesehen sein, analog zur zweiten Blende 160 wie in Figur 3 gezeigt.

In den Messzellen 200 und 300 kann die Regeleinrichtung 168 weggelassen werden. Ebenfalls ist denkbar, dass der bewegliche Teil 114' des Messkammergehäuses gegenüber der Trägerstruktur 102 nicht beweglich, sondern mit der Trägerstruktur 102 fest verbunden ist, wenn beispielsweise das zu untersuchende Fluid so beschaffen ist, dass die Messkammer 112 nicht beheizt werden muss.

## Patentansprüche

1. Messzelle (100, 200, 300),
- mit einer Messkammer (112), in die ein zu untersuchendes Fluid einleitbar ist,
- mit einer Einrichtung (104) zur Aufnahme einer Lichtquelle (106), die an einem ersten Ende (116) der Messkammer (112) angeordnet ist,
- mit einer Einrichtung (108) zur Aufnahme eines Lichtsensors (110), die an einem zweiten, dem ersten Ende gegenüberliegenden Ende (118) der Messkammer (112) angeordnet ist, derart, dass ein von der Lichtquelle (106) in die Messkammer (112) ausgesandter Lichtstrahl (120) auf den Lichtsensor (110) trifft, und
**gekennzeichnet durch**
- einen Auslass (138) und einen Einlass (140), die beide in der Nähe des ersten Endes (116) oder beide in der Nähe des zweiten Endes (118) der Messkammer (112) angeordnet sind, wobei der Auslass (138) dem Zentrum (142) der Messkammer (112) näher ist als der Einlass (140),
- eine Pumpeinrichtung (142), mittels der Fluid über den Auslass (138) aus der Messkammer (112) absaugbar ist, und
- eine Filtereinrichtung (146), mittels der Partikel, die eine Verschmutzung der Messkammer (112) bewirken können, aus dem durch die Pumpeinrichtung (142) über den Auslass (138) abgesaugten Fluid filterbar sind, um ein gefiltertes Fluid zu erhalten, wobei mittels der Pumpeinrichtung (142) wenigstens ein Teil des gefilterten Fluids über den Einlass (140) wieder in die Messkammer (112) einspeisbar ist.

2. Messzelle (100, 200, 300) nach Anspruch 1,
wobei das gefilterte Fluid so in die Messkammer (112) eingespeist wird, dass es vom Einlass (140) in Richtung des Auslasses (138) fließt.

3. Messzelle (200, 300) nach Anspruch 2,
wobei in der Messkammer (112) eine erste Blende (156) vorgesehen ist, die zwischen dem Auslass (138) und dem Einlass (140) angeordnet ist, und die eine Öffnung (158) aufweist, durch die das gefilterte Fluid in Richtung des Auslasses (138) strömt und durch die der Lichtstrahl (120) hindurch verläuft.

4. Messzelle (200, 300) nach einem der Ansprüche 1 bis 3,
wobei die Messzelle einen Fluideinlass (154) aufweist, über den das zu untersuchende Fluid in die Messkammer (112) einleitbar ist, wobei der Fluideinlass (154) an einem Ende der Messkammer (112) angeordnet ist, der dem Ende der Messkammer, an dem der Auslass (138) und der Einlass (140) angeordnet sind, gegenüberliegt.

5. Messzelle (200, 300) nach einem der Ansprüche 3 bis 4,
wobei in der Messkammer (112) eine zweite Blende (160) vorgesehen ist, die sich in der Nähe des Fluideinlasses (154) befindet, und die so ausgestaltet ist, dass zu untersuchendes Fluid, das über den Fluideinlass (154) in die Messkammer (112) eingeleitet wird, mittels der zweiten Blende (160) in Richtung des Auslasses (138) gelenkt wird.

6. Messzelle nach Anspruch 5,
wobei die zweite Blende als Scheibe mit einer Öffnung ausgestaltet ist, auf der ein rohrförmiger Aufsatz vorgesehen ist, derart, dass das Innere des rohrförmigen Aufsatzes eine Verlängerung der Öffnung der Scheibe bildet, und der Lichtstrahl durch die Öffnung und das Innere des Aufsatzes hindurch verläuft.

7. Messzelle nach Anspruch 2,
- mit einem ersten Auslass (170) und einem ersten Einlass (172) die beide in der Nähe des ersten Endes (116) der Messkammer angeordnet sind, wobei der erste Auslass (170) dem Zentrum (142) der Messkammer näher ist als der erste Einlass (172),
- mit einem zweiten Auslass (138) und einem zweiten Einlass, (140) die beide in der Nähe des zweiten Endes (118) der Messkammer angeordnet sind, wobei der zweite Auslass dem Zentrum der Messkammer näher ist als der zweite Einlass,
- wobei mittels der Pumpeinrichtung Fluid über den ersten Auslass und den zweiten Auslass aus der Messkammer absaugbar ist, und
- wobei mittels der Filtereinrichtung Partikel, die eine Verschmutzung der Messkammer bewirken können, aus dem durch die Pumpeinrichtung über den ersten Auslass und den zweiten Auslass abgesaugten Fluid filterbar sind, um ein gefiltertes Fluid zu erhalten,
- wobei mittels der Pumpeinrichtung wenigstens ein Teil des gefilterten Fluids über den ersten Einlass und den zweiten Einlass wieder in die Messkammer einspeisbar ist.

8. Messzelle nach Anspruch 7,
- wobei in der Messkammer eine erste Blende (156) vorgesehen ist, die zwischen dem ersten Auslass und dem Einlass angeordnet ist, und die eine Öffnung (158) aufweist, durch die das gefilterte Fluid von dem ersten Einlass in Richtung des ersten Auslasses strömt, und durch die der Lichtstrahl hindurch verläuft, und
- wobei in der Messkammer eine zweite Blende (160') vorgesehen ist, die zwischen dem zweiten Auslass und dem zweiten Einlass angeordnet ist, und die eine Öffnung (166) aufweist, durch die das gefilterte Fluid von dem zweiten Einlass in Richtung des zweiten Auslasses strömt, und durch die der Lichtstrahl hindurch verläuft.

9. Messzelle nach einem der Ansprüche 1 bis 8,
wobei die Pumpeinrichtung ein Steuerelement (148) aufweist, mittels dem einstellbar ist, welcher Anteil des gefilterten Fluids wieder in die Messkammer eingespeist wird.

10. Messzelle nach Anspruch 9,
wobei das Steuerelement ansteuerbar ist, derart, dass der Anteil des gefilterten Fluids, der wieder in die Messkammer eingespeist wird, durch die Ansteuerung variiert werden kann.

11. Messzelle nach Anspruch 9,
wobei der Anteil des gefilterten Fluids, der wieder in die Messkammer eingespeist wird, so erhöht werden kann, dass mittels des gefilterten Fluids eine Säuberung des Bereichs der Messkammer zwischen einem Auslass und dem Ende, an dem sich der Auslass befindet, erfolgt.

12. Messzelle nach einem der Ansprüche 1 bis 11,
wobei der Anteil des gefilterten Fluids, der wieder in die Messkammer eingespeist wird, bezüglich des abgesaugten Fluids so eingestellt wird, dass das zu untersuchende Fluid nicht oder nur zum vernachlässigbaren Teil zu der Lichtquelle oder zu dem Lichtsensor gelangen kann, andererseits aber keine zu starke Verdünnung des zu untersuchenden Fluids durch das eingespeiste, gefilterte Fluid erfolgt.

13. Messzelle nach einem der Ansprüche 1 bis 12,
- mit einer Trägerstruktur, (102) die eine Einrichtung (104) zur Aufnahme der Lichtquelle und einer Einrichtung (108) zur Aufnahme des Lichtsensors aufweist,
- wobei die Messkammer ein Messkammergehäuse (114) aufweist, und wobei die Einrichtung zur Aufnahme der Lichtquelle ein erstes Ende des Messkammergehäuses, und die Einrichtung zur Aufnahme des Lichtsensors ein zweites Ende des Messkammergehäuses bilden,
- mit einer an oder in der Trägerstruktur vorgesehenen Führung, entlang der sich ein Teil eines Messkammergehäuses (114') relativ zu der Trägerstruktur bewegen kann, derart, dass im Falle einer thermischen Ausdehnung des beweglichen Teils des Messkammergehäuses eine Krafteinwirkung desselben auf die Trägerstruktur soweit wie möglich vermieden wird.

14. Messzelle nach einem der Ansprüche 1 bis 13,
wobei die Messzelle eine Regeleinheit (168) aufweist, mittels derer eine Abstrahlleistung der Lichtquelle so nachregelbar ist, dass eine Stärke eines Ausgangssignals des Lichtsensors bei Abwesenheit von Fluid in der Messkammer unabhängig vom Grad der Verschmutzung der Messkammer oder anderer Komponenten der Messzelle einem bestimmten Wert entspricht.

15. Opazimeter,
mit einer Messzelle nach einem der Ansprüche 1 bis 14.

## Claims

1. A measuring cell (100, 200, 300), comprising
- a measuring chamber (122) into which a fluid to be examined can be introduced,
- a means (104) for accommodating a light source (106), which is disposed at a first end (116) of said measuring chamber (112),
- a means (106) for accommodating a light sensor (110), which is disposed at a second end (118) of said measuring chamber (112) opposite said first end, such that a light beam (120) emitted from said light source (106) into said measuring chamber (112) hits said light sensor (110), and
**characterized by**
- an outlet (138) and an inlet (140), both being disposed in the vicinity of said first end (116) of,said measuring chamber (112) or both being disposed in the vicinity of said second end (118) of said measuring chamber (112), wherein said outlet (138) is closer to said centre (142) of said measuring chamber (112) than said inlet (140),
- a pumping device (142), by means of which the fluid can be extracted from said measuring chamber (112) via said outlet (138), and
- a filtering device (146), by means of which particles, which may cause contamination of said measuring chamber (112), can be filtered from the fluid extracted by said pumping device (142) via said outlet (138) in order to obtain a filtered fluid, wherein at least a portion of the filtered fluid can be fed back via said inlet (140) into said measuring chamber (112) by means of said pumping device (142).

2. The measuring cell (100, 200, 300) according to claim 1,
wherein the filtered fluid is fed into said measuring chamber (112) such that it flows from said inlet (140) towards said outlet (138).

3. The measuring cell (200, 300) according to claim 2,
wherein a first aperture (156), which is arranged between said outlet (138) and said inlet (140) and which has an opening (158), through which the filtered fluid flows towards said outlet (138) and through which said light beam (120) passes, is provided in said measuring chamber (112).

4. The measuring cell (200, 300) according to any one of claims 1 to 3,
wherein said measuring cell includes a fluid inlet (154) through which the fluid to be examined can be introduced into said measuring chamber (112), wherein said fluid inlet (154) is disposed at one end of said measuring chamber (112) opposite the end of said measuring chamber, in which said outlet (138) and said inlet (140) are arranged.

5. The measuring cell (200, 300) according to any one of claims 3 to 4,
wherein a second aperture (160), which is located in the vicinity of said fluid inlet (154) and which is configured such that fluid to be examined, which is introduced into said measuring chamber (112) via said fluid inlet (154), is directed towards said outlet (138) by means of said second aperture (160), is provided in said measuring chamber (112).

6. The measuring cell according to claim 5,
wherein said second diaphragm is configured as a disc with an opening, on which a tubular attachment is provided, such that the interior of said tubular attachment forms an extension of said opening of said disk and said light beam passes through said opening and the interior of said attachment.

7. The measuring cell according to claim 2, comprising
- a first outlet (170) and a first inlet (172), both being arranged in the vicinity of said first end (116) of said measuring chamber, wherein said first outlet (170) is closer to said centre (142) of said measuring chamber than said first inlet (172),
- a second outlet (138) and a second inlet (140), both being arranged in the vicinity of said second end (118) of said measuring chamber, wherein said second outlet is closer to said centre of said measuring chamber than said second inlet,
- wherein, by means of said pumping device, fluid can be extracted from said measuring chamber via said first outlet and said second outlet, and
- wherein, by means of said filtering device, particles, which may cause contamination of said measuring chamber, can be filtered from the fluid extracted by said pumping device via said first outlet and said second outlet in order to obtain a filtered fluid,
- wherein, by means of said pumping device, at least a portion of the filtered fluid can be fed back into said measuring chamber via said first inlet and said second inlet.

8. The measuring cell according to claim 7,
- wherein a first diaphragm (156), which is arranged between said first outlet and said first inlet and has an opening (158) through which the filtered fluid flows from said fist inlet towards said first outlet and through which said light beam passes, is provided in said measuring chamber, and
- wherein a second diaphragm (160'), which is arranged between said first outlet and said first inlet and has an opening (166) through which the filtered fluid flows from said second inlet towards said second outlet and through which said light beam passes, is provided in said measuring chamber.

9. The measuring cell according to any one of claims 1 to 8,
wherein said pumping device comprises a control element (148), by means of which the fraction of said filtered fluid, which is fed back into said measuring chamber, can be adjusted.

10. The measuring cell according to claim 9,
wherein said control element is controllable in such a manner that the fraction of the filtered fluid, which is fed back into said measuring chamber, can be varied by the control.

11. The measuring cell according to claim 9,
wherein the fraction of the filtered fluid, which is fed back into said measuring chamber, can be increased such that, by means of the filtered fluid, a cleaning of the portion of said measuring chamber between an outlet and the end, at which said outlet is located, is performed.

12. The measuring cell according to any one of claims 1 to 11,
wherein the fraction of the filtered fluid, which is fed back into said measuring chamber, is adjusted with respect to the extracted fluid such that no fluid to be axamined, or only a negligible portion of the fluid to be examined, can reach said light source or said light sensor, while, on the other hand, the fluid to be examined is not diluted too much by the filtered fluid fed in.

13. The measuring cell according to any one of claims 1 to 12, comprising
- a support structure (102), comprising a means (104) for accommodating said light source and a means (108) for accommodating said light sensor,
- wherein said measuring chamber includes a measuring chamber housing (114) and wherein said means for accommodating said light source forms a first end of said measuring chamber housing, and said means for accommodating said light sensor forms a second end of said measuring chamber housing,
- comprising a guide provided on or in said support structure, along which a part of a measuring chamber housing (114') can move relative to said support structure, such that, in the event of thermal expansion of the movable part of said measuring chamber housing, an application of force on said support structure is avoided as much as possible.

14. The measuring cell according to one of claims 1 to 13,
wherein said measuring cell includes a regulation unit (168), by means of which a power radiated by said light source can be readjusted such that a strength of an output signal of said light sensor in the absence of fluid in said measuring chamber corresponds to a given value, irrespective of the degree of contamination of said measuring chamber or other components of said cell.

15. An opacimeter,
comprising a measuring cell according to any one of claims 1 to 14.

## Revendications

1. Cellule de mesure (100, 200, 300), comportant
- une chambre de mesure (112) dans laquelle peut être introduit un fluide à analyser,
- un dispositif (104) pour recevoir une source de lumière (106), qui est agencé à une première extrémité (116) de la chambre de mesure (112),
- un dispositif (108) pour recevoir un capteur de lumière (110), qui est agencé à une seconde extrémité (118) opposée à la première extrémité de la chambre de mesure (112) de telle sorte qu'un rayon lumineux (120) émis par la source de lumière (106) dans la chambre de mesure (112) tombe sur le capteur de lumière (110), et
**caractérisée par**
- une sortie (138) et une entrée (140) qui sont agencées toutes les deux à proximité de la première extrémité (116) ou toutes les deux à proximité de la seconde extrémité (118) de la chambre de mesure (112), la sortie (138) étant plus proche du centre (142) de la chambre de mesure (112) que l'entrée (140),
- un dispositif de pompe (142) permettant d'aspirer un fluide hors de la chambre de mesure (112) via la sortie (138), et
- un dispositif formant filtre (146) permettant de filtrer des particules, susceptibles de causer un encrassement de la chambre de mesure (112), hors du fluide aspiré par le dispositif de pompe (142) via la sortie (138), afin d'obtenir un fluide filtré, une partie au moins du fluide filtré pouvant être réintroduite dans la chambre de mesure (112) via l'entrée (140) au moyen du dispositif de pompe (142).

2. Cellule de mesure (100, 200, 300) selon la revendication 1,
dans laquelle le fluide filtré est introduit dans la chambre de mesure (112) de manière à s'écouler depuis l'entrée (140) en direction de la sortie (138).

3. Cellule de mesure (200, 300) selon la revendication 2,
dans laquelle un premier diaphragme (156) est prévu dans la chambre de mesure (112), qui est agencé entre la sortie (138) et l'entrée (140) et qui présente une ouverture (158) à travers laquelle s'écoule le fluide filtré en direction de la sortie (138) et à travers laquelle s'étend le rayon lumineux (120).

4. Cellule de mesure (200, 300) selon l'une des revendications 1 à 3,
dans laquelle la cellule de mesure comprend une entrée de fluide (154) via laquelle le fluide à analyser peut être introduit dans la chambre de mesure (112), l'entrée de fluide (154) étant agencée à une extrémité de la chambre de mesure (112), qui est agencée à l'opposé de l'extrémité de la chambre de mesure à laquelle sont agencées la sortie (138) et l'entré (140).

5. Cellule de mesure (200, 300) selon l'une des revendications 3 à 4,
dans laquelle un second diaphragme (160) est prévu dans la chambre de mesure (112), qui se trouve à proximité de l'entrée de fluide (154) et qui est conçu de telle sorte que le fluide à analyser, introduit dans la chambre de mesure (112) via l'entrée de fluide (154), est dirigé en direction de la sortie (138) au moyen du second diaphragme (160).

6. Cellule de mesure selon la revendication 5,
dans laquelle le second diaphragme est conçu en forme de disque muni d'un orifice, sur lequel est prévu un raccord tubulaire de telle sorte que l'intérieur du raccord tubulaire constitue un prolongement de l'orifice du disque et que le rayon lumineux traverse l'orifice et l'intérieur du raccord.

7. Cellule de mesure selon la revendication 2, comportant
- une première sortie (170) et une première entrée (172) qui sont agencées toutes les deux à proximité de la première extrémité (116) de la chambre de mesure, la première sortie (170) étant plus proche du centre (142) de la chambre de mesure que la première entrée (172),
- une seconde sortie (138) et une seconde entrée (140) qui sont agencées toutes les deux à proximité de la seconde extrémité (118) de la chambre de mesure, la seconde sortie étant plus proche du centre de la chambre de mesure que la seconde entrée,
- le dispositif de pompe permettant d'aspirer un fluide hors de la chambre de mesure via la première sortie et via la seconde sortie, et
- un dispositif formant filtre permettant de filtrer des particules, susceptibles de causer un encrassement de la chambre de mesure, hors du fluide aspiré par le dispositif de pompe via la première sortie et via la seconde sortie, afin d'obtenir un fluide filtré,
- le dispositif de pompe permettant de réintroduire une partie au moins du fluide filtré dans la chambre de mesure via la première entrée et via la seconde entrée.

8. Cellule de mesure selon la revendication 7, dans laquelle
- un premier diaphragme (156) est prévu dans la chambre de mesure, qui est agencé entre la première sortie et l'entrée et qui présente un orifice (158) à travers lequel le fluide filtré s'écoule depuis la première entrée en direction de la première sortie et à travers lequel s'étend le rayon lumineux, et
- un second diaphragme (160') est prévu dans la chambre de mesure, qui est agencé entre la seconde sortie et la seconde entrée et qui présente un orifice (166) à travers lequel le fluide filtré s'écoule depuis la seconde entrée en direction de la seconde sortie et à travers lequel s'étend le rayon lumineux.

9. Cellule de mesure selon l'une des revendications 1 à 8,
dans laquelle le dispositif de pompe comprend un élément de commande (148) permettant de régler la part du fluide filtré qui est réintroduite dans la chambre de mesure.

10. Cellule de mesure selon la revendication 9,
dans laquelle le dispositif de commande peut être piloté de telle sorte que la part du fluide filtré qui est réintroduite dans la chambre de mesure peut être vairée par le pilotage.

11. Cellule de mesure selon la revendication 9,
dans laquelle la part du fluide filtré qui est réintroduite dans la chambre de mesure peut être augmentée de telle sorte qu'un nettoyage de la zone de la chambre de mesure entre une sortie et l'extrémité à laquelle se trouve la sortie s'effectue au moyen du fluide filtré.

12. Cellule de mesure selon l'une des revendications 1 à 11,
dans laquelle la part du fluide filtré qui est réintroduite dans la chambre de est réglée par rapport au fluide aspiré de telle sorte que le fluide à analyser ne peut pas parvenir à la source de lumière ou au capteur de lumière, ou bien y peut parvenir seulement avec une partie négligeable, et que d'autre part il n'y a pas de dilution trop forte du fluide à analyser par le fluide filtré introduit.

13. Cellule de mesure selon l'une des revendications 1 à 12, comportant
- une structure porteuse (102) qui comprend un dispositif (104) pour recevoir la source de lumière et un dispositif (108) pour recevoir le capteur de lumière,
- la chambre de mesure comprenant un boîtier (114), et le dispositif pour recevoir la source de lumière formant une première extrémité du boîtier de la chambre de mesure et le dispositif pour recevoir le capteur de lumière formant une seconde extrémité du boîtier de la chambre de mesure,
- un guidage prévu sur ou dans la structure porteuse, le long duquel une partie du boîtier (114') de la chambre de mesure peut se déplacer par rapport à la structure porteuse, de telle sorte que dans le cas d'une dilatation thermique de la partie mobile du boîtier de la chambre de mesure, une force exercée par celle-ci sur la structure porteuse est évitée le plus possible.

14. Cellule de mesure selon l'une des revendications 1 à 13,
dans laquelle la cellule de mesure présente une unité de régulation (168) au moyen de laquelle une puissance d'émission de la source de lumière peut être régulée de telle sorte qu'une intensité d'un signal de sortie du capteur de lumière, en absence de fluide dans la chambre de mesure, correspond à une valeur déterminée, indépendamment du degré d'encrassement de la chambre de mesure ou d'autres composants de la cellule de mesure.

15. Opacimètre,
comportant une cellule de mesure selon l'une des revendications 1 à 14.
